# EUROPEAN PATENT APPLICATION

(11) **EP 1 269 863 A1**
(43) Date of publication of application: **02.01.2003**
(21) Application number: 01202381.8
(22) Date of filing: 20.06.2001
(51) Int. Cl.: A23L 1/40, A23L 1/29, A23L 1/314, A23L 1/22, A23L 1/325, A23L 1/237, A23P 1/02, A23P 1/08

(54) **Soft bouillon tablet**

(71) Applicant: SOCIETE DES PRODUITS NESTLE S.A., 1800 Vevey (CH)
(72) Inventor: Froehlich, Markus, 8051 Zürich (CH); Palzer, Stefan, 8320 Fehraltorf (CH); Rueger, Max, 8400 Winterthur (CH); Soltermann, Patrick, 8500 Frauenfeld (CH); Schmutz, Walter, 8604 Volketswil (CH)
(74) Representative: Wavre, Claude-Alain

(57) **Abstract**

A soft bouillon tablet which comprises only or mainly oil and no or little fat beside non fat conventional bouillon ingredients.

## Description

The present invention relates to a soft bouillon tablet and to a process for the production of a soft bouillon tablet.

A conventional way of manufacturing soft bouillon tablets comprises mixing powdered bouillon components with oil and fat, dosing the pasty mass thus obtained with a piston into a tablet shaped cavity in which a wrapping paper is already folded, closing the wrapping paper and pushing the tablet out of the cavity. The machine performing this operation might be of the Corazza type, for example.

Nowadays there is a nutritional trend to avoid or at least reduce consumption of fats rich in trans fatty acids and saturated fatty acids and to preferably consume healthy oils rich in monounsaturated fatty acids and/or polyunsaturated fatty acids such as sunflower, safflower, canola and/or olive oil, for example.

A first object of the present invention is to provide a soft bouillon tablet which only or mainly contains oil, especially a healthy oil rich in monounsaturated fatty acids and/or polyunsaturated fatty acids, and no or only little amounts of fat beside non fat conventional bouillon ingredients.

A second object of the present invention is to provide a soft bouillon tablet which has no or only little fat solidification after rehydratation with hot water when the rehydrated product is getting cold.

A third object of the present invention is to provide a soft bouillon tablet which has an improved cold water solubility.

A fourth object of the present invention is to provide a process for manufacturing such a soft bouillon tablet.

It has now been found that the first three objects of the present invention can be met by a soft bouillon tablet which comprises, in total tablet weight %, from 3 to 60%, preferably from 10 to 60%, and more preferably from 15 to 60% of an oil and possibly fat, from 5 to 70% of a fine filler, up to 79% of a coarse filler, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, dehydrated vegetables, herb leafs and/or plant extracts.

The fourth object of the present invention can be met by a process for the production of a soft bouillon tablet, which consists of preparing a premix of powdered constituents comprising, in total tablet weight %, from 5 to 70% of a fine filler, up to 79% of a coarse filler, and optionally spices, flavours, and/or plant extracts, adding, in total tablet weight %, from 3 to 60%, preferably from 10 to 60%, and more preferably from 15 to 60% of an oil into the dry premix while further mixing, optionally adding dehydrated vegetables and/or herb leafs, forming in tablet form and wrapping, and wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix and/or to the oil.

Throughout the present description, the expression "bouillon" is to be understood as meaning "bouillon and/or seasoning".

The expression "soft bouillon tablet" means "tablet obtained by forming a pasty mass of a mixture of powdered bouillon components with oil and possibly fat into a tablet shape".

The expression "oil" means "oil or mixture of oils which is liquid at room temperature and which more especially has a solid fat content (SFC) of less than 5% at 20°C".

Throughout the present description, the expression "fine filler" means "a powdered filler which has been milled to an especially fine granulometry or which has an especially fine granulometry".

The expression "coarse filler" means "a powdered filler which has not been milled to an especially fine granulometry or which does not have an especially fine granulometry".

Thus, it has surprisingly been found that it is possible to have only oil and no fat entrapped in a soft bouillon tablet provided the tablet also comprises a fine filler.

In this way, it is indeed possible to provide a soft bouillon tablet which only contains oil, especially a healthy oil rich in monounsaturated fatty acids and/or polyunsaturated fatty acids and no fat beside non fat conventional bouillon ingredients.

Thus, the present invention also involves a method for improving the nutritional quality of a soft bouillon tablet by at least partially replacing in the tablet, fats which contain trans fatty acids and/or saturated fatty acids with oils rich in monounsaturated fatty acids and/or polyunsaturated fatty acids.

Moreover, the present invention further involves a method for reducing consumption of trans fatty acids and/or saturated fatty acids by administering a food product prepared from a soft bouillon tablet in which fats which contain trans fatty acids and/or saturated fatty acids are at least partially replaced with oils rich in monounsaturated fatty acids and/or polyunsaturated fatty acids.

Such a soft bouillon tablet indeed has no or only little fat solidification after rehydratation with hot water when the rehydrated product is getting cold, and indeed has an improved cold water solubility.

In the present soft bouillon tablet, the oil may be any food grade oil, especially a healthy oil such as sunflower oil, safflower oil, olive oil and/or canola oil, for example.

The fat may be palm fat, palmolein or chicken fat, for example.

The fine filler may be a milled crystalline ingredient such as salt (sodium chloride), glutamate and/or sugar (sucrose), for example.

It may also be a fine powder of a porous ingredient such as maltodextrin and/or starch, which adsorbs the oil, for example.

A fine filler may comprise fine particles having a mean diameter of from 5 to 120 µm, preferably from 5 to 100 µm and more preferably from 5 to 80 µm, for example.

The mean diameter is defined as a 50% limit (D50) in particle distribution whereby 50% by volume of the particles have a diameter below the 50% limit and 50% by volume of the particles have a diameter above the 50% limit.

Preferably, these fine particles also have a span of from 2.0 to 5.0.

The span is defined as the broadness or width in particle distribution between a 10% limit (D10) and a 90% limit (D90) divided by the mean particle diameter (D50), whereby 10% by volume of the particles have a diameter below the 10% limit and 10% by volume of the particles have a diameter above the 90% limit.

The so called coarse filler may be a powdered crystalline ingredient such as salt, glutamate and/or sugar which has not been milled to an especially fine granulometry but which comprises particles the mean diameter of which is of from more than 120 to about 600 µm, preferably from about 150 to about 600 µm and more preferably between about 300 to about 500 µm, for example.

As stated above, the present process for the production of a soft bouillon tablet consists of preparing a premix of powdered constituents comprising, in total tablet weight %, from 5 to 70% of a fine filler, up to 79% of a coarse filler, and optionally spices, flavours, and/or plant extracts, adding, in total tablet weight %, from 3 to 60%, preferably from 10 to 60%, and more preferably from 15 to 60% of an oil into the dry premix while further mixing, optionally adding dehydrated vegetables and/or herb leafs, forming in tablet form and wrapping, wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix and/or to the oil.

Preparing the premix may be carried out by means of any suitable traditional powder mixer such as a horizontal mixer with plough-shaped heads arranged on its horizontal shaft or a ribbon mixer, for example.

The oil may be added into the dry premix through a pipe or any adequate nozzle, for example.

The fat may be added either in solid form to the dry premix or in liquefied form to the oil, for example.

Forming in tablet form and wrapping may be carried out by any adequate machine of the food industry which permits these operations, especially a machine which permits dosing the mass of mixed premix and oil with a piston into a tablet shaped cavity in which a wrapping paper is already folded, closing the wrapping paper and pushing the tablet out of the cavity, such as a machine of the Corazza type, for example.

A further, special advantage of an embodiment of the present process in which no or only little fat and only or mainly oil is used is that, in contrast with a conventional process, it is not necessary to ripen the mass which can immediately be formed into a tablet shaped cavity. The fat in conventional soft bouillon tablets namely has to be cooled and crystallised either before or after adding the rest of the ingredients.

An embodiment of the soft bouillon tablet and of the process for producing it according to the present invention is illustrated in the following Example in which the percentages are by weight unless indicated to the contrary.

The Example is preceded by a short description of the method used for analysing the particle size of the fine filler.

### Method 1: Particle size analysis

The particle size of the fine filler was analysed by means of a laser diffraction particle sizer (MASTERSIZER S, Malvern Instruments Ltd., Malvern/GB), coupled with a fully automated, air pressure controlled dry powder feeder (GMP ultra).

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50)
**D10:** 10% limit (10% by volume of the particles had a diameter below D10)
**D90:** 90% limit (10% by volume of the particles had a diameter above D90)
**Span:** (D90-D10)/D50

### Example 1

A soft bouillon tablet was produced which had the following composition (ingredients in %):

| | |
|---|---|
| Maltodextrin | 7 |
| Milled salt | 14.2 |
| Salt (non milled) | 30 |
| Monosodium glutamate (non milled) | 9.6 |
| Sugar (non milled) | 3 |
| Chicken fat | 4 |
| Onion powder | 1.7 |
| Flavours (mainly vegetable and | 3.5 |
| yeast extracts) | |
| Colourings | 0.7 |
| Parsley | 0.3 |
| Chicken meat | 1.0 |
| | |
| Sunflower oil | 25 |

The granulometry of the fine filler "maltodextrin" was as follows:

| | |
|---|---|
| D10 | 5.12 µm |
| D50 | 13.94 µm |
| D90 | 35.52 µm |
| Span | 2.2 |

The granulometry of the fine filler "milled salt" was as follows:

| | |
|---|---|
| D10 | 8.79 µm |
| D50 | 44.45 µm |
| D90 | 142.54 µm |
| Span | 3.0 |

The production process comprised the following steps:
- Weighing all ingredients (except the oil) into a ribbon blender.
- Mixing at 40 rpm for 5 min
- Emptying the premix into a big bag which can be stored for one week prior to the production of the bouillon mass.
- Adding the premix into a ribbon blender.
- Adding the sunflower oil through a pipe into the premix while mixing at 20 rpm for 10 min.
- Emptying the resulting mass into the hopper of a Corazza forming machine.
- Pushing down the mass into the hopper by a screw and feading to a piston which pushed the mass into a cavity in tablet form. The cavity was lined with the wrapping material. After closing the wrapping material by folding, the tablet was pushed out of the cavity.

The soft bouillon tablet thus obtained contained only sunflower oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

## Claims

1. A soft bouillon and/or seasoning tablet, which comprises, in total tablet weight %, from 3 to 60%, preferably from 10 to 60%, and more preferably from 15 to 60% of an oil and possibly fat, from 5 to 70% of a fine filler, up to 79% of a coarse filler, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, dehydrated vegetables, herb leafs and/or plant extracts.

2. A soft bouillon and/or seasoning tablet according to claim 1, in which the oil is a healthy oil selected from a group comprising sunflower oil, safflower oil, olive oil and/or canola oil.

3. A soft bouillon and/or seasoning tablet according to claim 1, in which the fine filler is a milled crystalline ingredient, especially a crystalline ingredient selected from a group comprising salt, glutamate and/or sugar.

4. A soft bouillon and/or seasoning tablet according to claim 1, in which the fine filler is a a fine powder of a porous ingredient such as maltodextrin and/or starch.

5. A soft bouillon and/or seasoning tablet according to claims 3 or 4, in which the fine filler comprises fine particles having a mean diameter of from 5 to 120 µm, preferably from 5 to 100 µm and more preferably from 5 to 80 µm, and a span of from 2.0 to 5.0.

6. A process for the production of a soft bouillon and/or seasoning tablet, which consists of preparing a premix of powdered constituents comprising, in total tablet weight %, from 5 to 70% of a fine filler, up to 79% of a coarse filler, and optionally spices, flavours, and/or plant extracts, adding, in total tablet weight %, from 3 to 60%, preferably from 10 to 60%, and more preferably from 15 to 60% of an oil into the dry premix while further mixing, optionally adding dehydrated vegetables and/or herb leafs, forming in tablet form and wrapping, and wherein, in total oil and fat weight %, up to 80% or even up to 70%, preferably up to 60% or even up to 50%, more preferably up to 40% or even up to 30%, even more preferably up to 20% or even up to 10%, and still more preferably up to only 5% fat are added to the dry premix and/or to the oil.

7. A method for improving the nutritional quality of a soft bouillon and/or seasoning tablet by at least partially replacing in the tablet, fats which contain trans fatty acids and/or saturated fatty acids with oils rich in monounsaturated fatty acids and/or polyunsaturated fatty acids.

8. A method for reducing consumption of trans fatty acids and/or saturated fatty acids by administering a food product prepared from a soft bouillon and/or seasoning tablet in which fats which contain trans fatty acids and/or saturated fatty acids are at least partially replaced with oils rich in monounsaturated fatty acids and/or polyunsaturated fatty acids.
